# EUROPÄISCHE PATENTSCHRIFT

(11) **EP 2 145 524 B1**
(45) Veröffentlichungstag und Bekanntmachung des Hinweises auf die Patenterteilung: **13.04.2011**
(21) Anmeldenummer: 09158474.8
(22) Anmeldetag: 22.04.2009
(51) Int. Cl.: B62D 49/06, A01D 41/12, A01D 43/08, A01D 67/00

(54) **Landwirtschaftliche Erntemaschine**
Agricultural harvester
Moissonneuse agricole

(30) Priorität: 15.07.2008 DE 102008033067
(43) Veröffentlichungstag der Anmeldung: 20.01.2010
(73) Patentinhaber: CLAAS Selbstfahrende Erntemaschinen GmbH, 33428 Harsewinkel (DE)
(72) Erfinder: Isfort, Heinrich, 48249, Dülmen (DE)

(56) Entgegenhaltungen:
- WO-A1-96/06768
- DE-A1- 10 327 478
- DE-C1- 4 413 970
- GB-A- 511 961
- GB-A- 848 707
- US-A- 4 611 683

## Beschreibung

Die Erfindung betrifft eine landwirtschaftliche Erntemaschine gemäß dem Oberbegriff von Anspruch 1,

In der modernen Landwirtschaft werden immer größere und schwerere Erntemaschine eingesetzt, insbesondere Erntemaschinen, wie Feldhäcksler oder Mähdrescher mit großen Vorsatzgeräten üben dabei eine starke Bodenverdichtung aus. Dabei hängt die Bodenverdichtung insbesondere von der Gewichtskraft (Masse) des angeordneten Erntevorsatzgerätes und von einem eventuell heckseitig angebrachten Ballastgewicht ab, wobei das Ballastgewicht wiederum vom Gewicht des montierten Erntevorsatzgerätes anhängt. Seit längerem wird versucht einerseits mit möglichst großvolumigen Rädern oder andererseits mit dem Einsatz von Raupenlaufwerken und einem vergrößerten Radstand der verstärkten Bodenverdichtung entgegenzuwirken.

Aus der DE 103 27 478 A ist es bekannt eine selbstfahrende Erntemaschine mit einer Einrichtung auszustatten, die es ermöglicht den Radstand der Räder variabel zu verändern, um eine angepasste Gewichtsverteilung auf die Fahrachsen realisieren zu können, die eine Anpassung an die Gewichtskraft des jeweils montierten Vorsatzgerätes zulässt. Nachteilig an dieser Lösung ist, dass trotz einer Radstandvergrößerung bei einem Einsatz von größeren Raupenlaufwerken, insbesondere an der vorderen Fahrachse das Problem besteht, ein solches montieren zu können, ohne einen Eingriff in den Aufbau der frontseitig angeordneten Arbeitsorgane vornehmen zu müssen, da die vorhandenen Radgehäuse von Serien-Erntemaschinen vom Platzangebot in der Längsausrichtung zum montierten Erntevorsatzgerät häufig, insbesondere bei Feldhäckslern nicht ausreichen, ein Raupenlaufwerk größerer Dimension aufzunehmen.

Aufgabe der zugrundeliegenden Erfindung ist es daher, eine landwirtschaftliche Erntemaschine derart weiterzubilden, um die im Stand der Technik genannten Nachteile zu vermeiden und insbesondere die Möglichkeit zu schaffen, eine an die Gewichtskraft eines montierten Vorsatzgerätes angepasste Gewichiskraftverteilung zu erreichen, die gleichzeitig den Einsatz von größer dimensionierten Raupenfahrwerken insbesondere an der vorderen Fahrachse zulässt, um eine verminderte Bodenverdichtung zu erreichen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Indem die Erntemaschine in zumindest ein Front- und zumindest ein Heckmodul (B, C) trennbar ist und wobei das zumindest eine Front- und das zumindest eine Heckmodul gegeneinander verschiebbar sind, wird vorteilhaft eine verbesserte Gewichtskrattverteilung auf die Fahrwerke der Erntemaschine erreicht, so dass der Einsatz von schweren Erntevorsatzgeräten ermöglicht und gleichzeitig eine verminderte Bodenverdichtung bewirkt wird.

In einer vorteilhaften Weiterbildung der Erfindung ist die Karosserie und das Fahrgestell der landwirtschaftlichen Erntemaschine, in einem Bereich zwischen den das Fahrwerk bildenden Fahrachsen in der Länge veränderbar, so dass aufgrund der erreichbaren Fahrachsabstandsveränderung eine an die Gewichtskraft eines montierten Vorsatzgerätes angepasste Gewichtskraftverteilung möglich ist und somit insbesondere der Einsatz von größer dimensionierten Raupenlaufwerken möglich ist, so dass die stattfindende Bodenverdichtung verringert werden kann und vorteilhaft Schädigungen an mehrfach zu erntenden Erntegutarten, wie z.B. Schäden an der Grasnarbe verhindert bzw. reduziert werden können.

In vorteilhafter Weiterbildung der Erfindung erfolgt die Längenveränderung der Karosserie und des Fahrgestells der Erntemaschine, ohne eine Veränderung am

Aufbau und/oder Funktion der Arbeitsorgane zu bewirken. Dies hat den Vorteil, dass der Erntegutfluss durch die Erntemaschine einer Serien-Erntemaschine beibehalten werden kann.

Um auf möglichst einfache Weise eine Längenveränderung zur besseren Gewichtskraftverteilung der Erntemaschine erreichen zu können, weisen die Karosserie und das Fahrgestell der Erntemaschine in einem Bereich zwischen den das Fahrwerk bildenden Fahrachsen eine Trennebene auf. Besonders vorteilhaft befinden sich in Bereich der Trenneben keine Arbeitsorgane der Erntemaschine, so dass für eine Längenveränderung keine bzw. wenig Umbauarbeiten an den Arbeitsorganen vorgenommen werden müssen.

In einer vorteilhaften Ausgestaltung der Erfindung werden zur Längenveränderung der Erntemaschine zwischen dem Frontmodul und dem Heckmodul Karosserieteile und Fahrgestellteile eingefügt, so dass auf konstruktiv einfache Weise ein Längenveränderung der Erntemaschine bewirkbar ist, um eine an die Schwere eines Erntevorsatzgerätes angepasste Gewichtskraftverteilung zu erreichen. Im einfachsten Fall können die im Bereich der Trennebenen vorhandenen Karosserie- und Fahrgestellteile der Erntemaschine durch verlängerte Karosserie- und Fahrgestellteile ersetzt werden, um eine Längenveränderung der Erntemaschine zu erreichen.

In vorteilhafter Weiterbildung der Erfindung ist in die Trennebene zumindest ein Verlängerungsmodul einfügbar, so dass in einem angemessenen Zeitrahmen die Längenveränderung der Karosserie und des Fahrgestells der Erntemaschine durchführbar ist. Vorzugsweise ist das Verlängerungsmodul teleskopierbar ausgeführt, um eine variable Längenveränderung der Erntemaschine erreichen zu können. Dadurch, dass das Verlängerungsmodul vormontiert Karosserieteile und Teile des Fahrgestells umfasst und eine Montageeinheit bildet, ist eine unkomplizierte Längenveränderung der Erntemaschine und damit eine schnelle an das jeweils montierte Vorsatzgerät angepasste Gewichtskraftverteilung erreichbar.

Entsprechende Mittel zur Fixierung des Verlängerungsmoduls sind vorteilhaft im Bereich der Trennebene vorhanden, um eine ausreichende Stabilität der Erntemaschine zu gewährleisten. Im einfachsten Fall erfolgt die Fixierung des Verlängerungsmoduls mit dem Front- und dem Heckmodul mittels an sich bekannter Schraubverbindungen.

Dadurch, dass die Karosserie, die Rahmenteile und Teile der Außenverkleidung der Erntemaschine umfasst, und das Fahrgesteil im Bereich der Trennebene in Fahrzeuglängsrichtung teleskopierbar ausgeführt sind, ist eine Längenveränderung der Erntemaschine ohne den Einsatz eines einzufügenden Verlängerungsmoduls ermöglicht. Vorteilhaft sind Verstellelemente vorhanden, die eingerichtet sind, eine Längenveränderung automatisch und/oder manuell zu bewirken.

Eine vorteilhafte Ausführung der erfindungsgemäßen Erntemaschine weist als Verstellelemente Hydraulikzylinder und/oder elektronische Stellmotoren auf, die vorzugsweise parallel zu den teleskopierbaren Teilen der Karosserie und des Fahrgestells angeordnet sind. Insbesondere die parallele Anordnung der Verstellelemente ist platzsparend und gewährleistet eine wirkungsvolle Kraftübertragung.

Indem durch die Längenveränderung der Karosserie und des Fahrgestells eine Verlängerung des die vordere Fahrachse aufnehmenden Radgehäuses bewirkt wird, ist sichergestellt, dass auch in der Fahrzeuglängsausrichtung größer dimensionierte Raupenlaufwerke montiert werden können, ohne Umbauarbeiten an im fronseitigen Bereich der Erntemaschine angeordnete Arbeitsorgane vornehmen zu müssen, um somit vorteilhaft die Bodenverdichtung auch bei Verwerdung eines Erntevorsatzgerätes hoher Gewichtskraft vermindern zu können.

In einer weiteren vorteilhaften Ausgestaltung der Erfindung ist einem die Wirkverbindung zwischen den Antriebs- und Arbeitsorganen herstellender Antriebsriemen ein Vorspannelement zugeordnet, so dass der Antriebsriemen angepasst an die Längenveränderung der Karosserie und des Fahrgestells der Erntemaschine ausreichend gespannt werden kann, so dass der Antriebsriemen auch bei einer Längenveränderung der Erntemaschine ein hohes Drehmoment und damit Antriebsleistung an die Arbeitsorgane übertragen kann.

Weitere vorteilhafte Ausgestaltungen sind Gegenstand weiterer Unteransprüche und werden nachfolgend anhand von einer Zeichnung näher erläutert.

Es zeigen:
- Figur 1:: eine schematische Seitenansicht einer selbstfahrenden Erntemaschine in Form eines selbstfahrenden Feldhäckslers mit einem Verlängerungsmodul
- Figur 2:: eine schematische Seitenansicht einer selbstfahrenden Erntemaschine in Form eines seibstfahrenden Feldhäckslers wie in Fig. 1 ohne Verlängerungsmodul

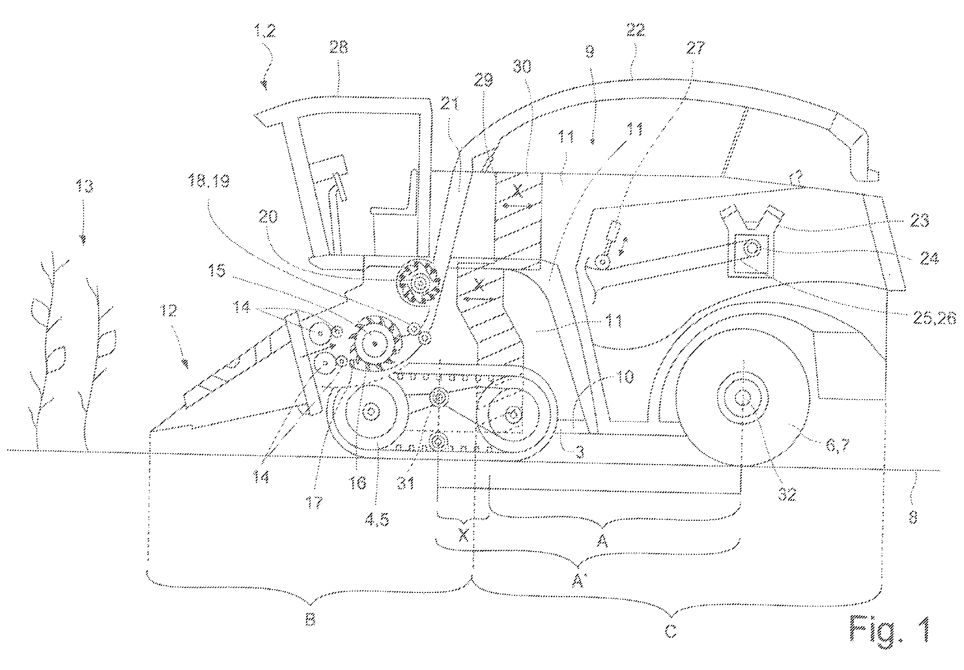

Figur 1 zeigt eine als selbstfahrender Feldhäcksler 1 ausgebildete landwirtschaftliche Erntemaschine 2. Die Erntemaschine 2 baut sich auf einem Fahrgestell 3 auf, das von einem vorderen Fahrwerk 4 in Form eines Raupenlaufwerkes 5 und von einem hinteren Fahrwerk 6 in Form von Rädern 7 gegen den Erdboden 8 abgestützt wird. Das Fahrgestell 3 stützt die noch näher zu beschreibenden Arbeits- und Antriebsorgane sowie die Karosserie 9, die Rahmenteile 10 und Teile der Außenhülle 11 der Erntemaschine 2 umfasst. In ihrem frontseitigen Bereich nimmt die Erntemaschine, 2 ein Erntevorsatzgerät 12 auf. Das Erntevorsatzgerät 12 ist abnehmbar an der Erntemaschine 2 montiert und durch andere Erntevorsatzgeräte austauschbar. Mittels des Erntevorsatzgerätes 12 aufgenommenes Erntegut 13, z.B. Mais, Gras oder andere Erntegutarten wird durch Vorpresswalzen 14 in die Erntemaschine 2 gefördert und einer Häckseltrommel 15 zugeführt. Die Häckseltrommel 15 nimmt an ihrem Umfang eine Vielzahl von Häckselmesser 16 auf, die das der Erntemaschine 2 zugeführte Erntegut 13 in Zusammenwirken mit einer Gegenschneide 17 zerkleinert. Durch die kinetische Energie der umlaufenden Häckseltrommel 15 tritt das zerkleinerte Erntegut 13 im rückwärtigen Bereich der Häckseltrommel 15 mit hoher Geschwindigkeit aus dieser aus und wird an paarweise angeordnete Crackerwalzen 18 übergeben. Die Crackerwalzen 18 bilden dabei eine sogenannte Nachzerkleinerungseinrichtung 19. Nachdem das Erntegut 13 die Nachzerkleinerungseinrichtung 19 passiert hat, gelangt es in den Winkbereich eines Nachbeschleunigers 20. Der Nachbeschleuniger 20 prägt dem Erntegut 13 in an sich bekannter Weise zusätzliche kinetische Energie auf, mittels derer das Erntegut 13 über einen in vertikaler Richtung weisenden Auswurfschacht 21 und einen diesem nachgeordneten schwenk- und drehbeweglichen Auswurfkrümmer 22 aus dem Feldhäcksler 1 herausgefördert wird. Im dargestellten Ausführungsbeispiel bilden das Erntevorsatzgerät 12, die Einzugsorgane 14, die Häckseltrommel 15, die Nachzerkleinerungseinrichtung 19, sowie der Nachbeschleuniger 20 die Arbeitsorgane der landwirtschaftlichen Erntemaschine 2.

Weiter ist dem Feldhäcksler 1 zumindest ein Antriebsmotor 23 zugeordnet, dessen abtriebsseitige Riemenscheibe 24 von einem Antriebsriemen 25 umschlungen wird. Der Antriebsriemen 25 bildet den Hauptantriebsriemen 26 und steht in an sich bekannter, hier nicht näher dargestellter Wirkverbindung mit den Antriebsorganen der Erntemaschine 2, um diese anzutreiben. In noch näher zu beschreibender Weise ist dem Antriebsriemen 25 ein Vorspannelement 27 zugeordnet. Im Ausführungsbeispiel bildet der Antriebsmotor 23 das Antriebsorgan. Die Bedienung der Erntemaschine 2 erfolgt von einer Fahrerkabine 28 aus, von der aus das Erntevorsatzgerät 12 einsehbar ist.

Bei landwirtschaftlichen Erntemaschinen 2 hängt die Belastung der Fahrwerke 6, wie Räder 7 oder Raupenlaufwerke 5 und somit die Bodenverdichtung in einem erheblichem Umfang von der Gewichtskraft eines montierten Erntevorsatzgerätes 12 und einem eventuell vorhandenen, hier nicht dargestellten Ballastgewicht ab. Bei relativ schweren Erntevorsatzgeräten 12 muss somit ein entsprechendes Baliastgewicht am Heck der Erntemaschine 2 angeordnet werden, welches wiederum das Gesamtgewicht der Erntemaschine 2 erhöht und zu einer höheren Bodenverdichtung führt.

In erfindungsgemäßer Weise ist die Erntemaschine 2 in zumindest ein Frontmodul B und in zumindest ein Heckmodul C trennbar, wobei das Front- und das Heckmodul B, C gegeneinander verschiebbar sind. Eine Trennung in mehreren Modulen liegt im Rahmen der Erfindung. Im Ausführungsbeispiel ist die Karosserie 9 und das Fahrgestell 3 der landwirtschaftlichen Erntemaschine 2 in einem Bereich zwischen den das Fahrwerk 4, 6 bildenden Fahrachsen 31, 32 in der Länge veränderbar, so dass eine an die Gewichtskraft eines montierten Erntevorsatzgerätes 12 angepasste Gewichtskraftverteilung auf die Fahrwerke 4, 6 erfolgt. Im Ausführungsbeispiel ist der Erntemaschine 2 im Bereich einer Trennebene 29 zwischen dem Frontmodul B und dem Heckmodul C ein Vertangerungsmodul 30 zwischengeschaltet, so dass die Erntemaschine 2 insgesamt um den Abstand X verlängert ist. Entlang der Trennebene 29, welche umfangsseitig der Erntemaschine, 2 verläuft, sind hier nicht näher dargestellt, lösbare Fixierungsmittel, im einfachsten Fall an sich bekannte Schraubenverbindungen angeordnet, so dass durch Lösen der Fixierungsmittel die Erntemaschine 2 entlang der Trennebene 29 in ein Frontmodul B und in ein Heckmodul C trennbar ist.

In einer vorteilhaften Ausgestaltung werden zur Längenveränderung der Erntemaschine 2 zwischen dem Frontmodul B und dem Heckmodul B Karosserieteile 11 und Fahrgestellteile 10 eingefügt, so dass auf konstruktiv einfache Weise eine Längenveränderung der Erntemaschine 2 bewirkbar ist, um eine an die Schwere eines Erntevorsatzgerätes 12 angepasste Gewichtskraftverteilung zu erreichen. Zudem ist denkbar, dass die im Bereich der Trennebene 29 vorhandenen Karosserie- und Fahrgestellteile 11, 10 der Erntemaschine 2 durch verlängert Karosserie- und Fahrgestellteile 10, 11 ersetzt werden, um die Längenveränderung der Erntemaschine 2 zu erreichen.

In vorteilhafter Weise befindet sich die Trennebene 29 in einem Bereich der Erntemaschine 2, die keine der oben genannten Arbeitsorgane der Erntemaschine 2 aufweist, so dass die Erntemaschinenverlängerung bewirkbar ist, ohne kostenintensive Umbauarbeiten an den Arbeitsorganen vornehmen zu müssen. Dies hat den Vorteil, dass der Aufbau und die Funktion der Arbeitsorgane unverändert bleibt und somit der Erntegutfluss durch die Erntemaschine 2 dem einer Serien-Erntemaschine entspricht. Hier nicht dargestellte sich im Bereich der Trennebene 29 befindliche Schlauchleitungen werden entweder entsprechend der Längenveränderung durch längere Schlauchleitungen ersetzt oder es sind bereits in der Länge variable Schlauchleitungen vorhanden, die an die Längenveränderung der Erntemaschine 2 anpassbar sind. Durch Einfügen des Verlängerungsmoduls 30, das vorzugsweise vormontiert Rahmenteile 10 und Teile der Außenverkleidung 11 der Erntemaschine 2 umfasst, ist somit der Abstand A zwischen der vorderen und hinteren Fahrachse 31, 32 um den Abstandswert X auf den Abstand A' veränderbar, um entsprechend der Gewichtskraft des montierten Erntevorsatzgerätes 12 eine verbesserte Gewichtsverteilung der Erntemaschine 2 und eine somit verminderte Bodenverdichtung zu erreichen. Zur Befestigung des Verlängerungsmoduls 30 sind hier nicht näher dargestellte Fixierungselemente vorhanden, die ein schnelles Einfügen des Verlängerungsmoduls 30 ermöglichen. Denkbar ist die Fixierung mittels an sich bekannter Schraubenverbindung herzustellen. In vorteilhafter Weiterbildung der Erfindung erfolgt durch das Einfügen eines Verlängerungsmoduls 30 gleichfalls eine Verlängerung des die vordere Fahrachse 31 aufnehmenden Radgehäuses 33.

Durch die Verlängerung des Radgehäuses 33 wird vorteilhaft die Möglichkeit geschaffen, ein wie im Ausführungsbeispiel dargestelltes Raupenlaufwerk 5 größerer Dimension an die vordere Fahrachse 31 zu montieren, ohne Umbauarbeiten an den bereits oben genannten Arbeitsorganen vornehmen zu müssen, so dass mittels Einsatzes eines größer dimensionierten Raupenlaufwerks 5 eine vergrößerte Aufstandsfläche vorhanden ist und damit die Bodenverdichtung vermindert wird. Im Falle der Nutzung von insbesondere in der Fahrzeuglängsrichtung größer dimensionierter Raupenlaufwerke 5 können somit kostenintensive Umbaumaßnahmen an den im Frontmodul B angeordneten Arbeitsorganen vermieden werden, die ansonsten störend den Anbau von größer dimensionierten Raupenlaufwerken 5 behindern würden. Der Erntegutfluss durch die Erntemaschine 2 bleibt somit unverändert.

Eine optimale Führung des Hauptantriebsriemen 26, der die wirkverbindung zwischen den Antriebsmotor 23 und den bereits genannten Arbeitsorganen herstellt, ist bei einer Längenveränderung der Erntemaschine 2 gegeben, wenn, wie in Fig. 1 dargestellt. dem Hauptantriebsriemen 26 ein Vorspannelement 27 zugeordnet ist. Unter dem Gesichtspunkt der Übertragung hoher Antriebsenergien und einer sicheren formschlüssigen Führung des Hauptantriebsriemens 26 ist das Vorspannelement 27 so ausgebildet, das es eine hier nicht näher dargestellte Spannrolle aufweist, deren Druckbeaufschlagung oder -entlastung zum Spannen des Hauptantriebsriemen 26 führt, so dass dieser angepasst an die Längenveränderung der Erntemaschine 2 ausreichend gespannt werden kann, so dass der Hauptantriebsriemen 26 im Falie einer Längenveränderung der Erntemaschine 2 ein hohes Drehmoment und damit Antriebsleistung an die im Frontmodul B angeordneten Arbeitsorgane übertragen kann.

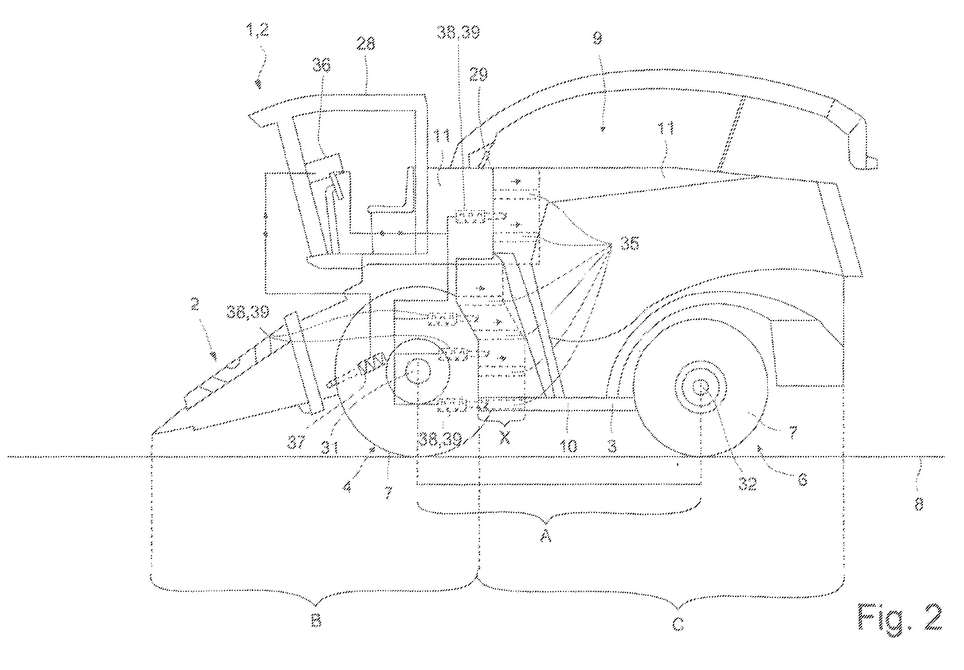

Figur 2 zeigt eine vorteilhafte Ausgestaltung der Erfindung. Die dargestellte als selbstfahrender Feldhäcksler 1 ausgebildete landwirtschaftliche Erntemaschine 2 baut sich entsprechend der Fig. 1 auf einem Fahrgestell 3 auf, das von einem vorderen Fahrwerk 4 in Form von Rädern 7 und von einem hinteren Fahrwerk 6 in Form von Rädern 7 gegen den Erdboden 8 abgestützt wird. Das Fahrgestell 3 stützt die in Fig. 1 bereits näher beschriebenen und deshalb hier nicht näher dargestellten Arbeits- und Antriebsorgane sowie die Karosserie 9, die Rahmenteil 10 und Teile der Außenhülle 11 der Erntemaschine 2 umfasst, ab. In ihrem frontseitigen Bereich nimmt die Erntemaschine 2 ein Erntevorsatzgerät 12 auf. Erfindungsgemäß ist eine Längenveränderung der Karosserie 9 und des Fahrgestells 3 der Erntemaschine 2 durch teleskopierbare Teile des Rahmengestells 3 und der Karosserie 9 der Erntemaschine 2 bewirkbar. Dargestellt ist die Erntemaschine 2 im nicht verlängertem Zustand. Dazu weist die Erntemaschine 2 entlang einer Trennebene 29, die die Erntemaschine 2 in ein Front- und in ein Heckmodul B, C trennt, umfangsseitig Karosserieteile 10 und Teile des Rahmengestells 11 auf, welche in der mit einem Pfeil dargestellten Fahrzeuglängsrichtung teleskopierbar ausgeführt sind, um eine Längenveränderung der Erntemaschine 2 bewirken zu können. Um eine ausreichende Stabilität beim Verschieben des Heckmoduls C gegenüber dem Frontmodul B der Erntemaschine 2 erreichen zu können, sind Führungselemente 35 im Bereich der Trennebene 29 vorhanden, so dass mittels der Teleskopierbarkeit der Karosserie 9 und des Fahrgestells 3 eine Veränderung des Radabstandes A von der vorderen Fahrachse 31 zur hinteren Fahrachse 32 stufenlos innerhalb des maximalen Abstandswertes X möglich ist, um somit eine an das montierte Erntevorsatzgerät 12 angepasste Gewichtsverteilung der Erntemaschine 2 zu erreichen. Um die stufenlose Längenveränderung bewirken zu können, sind Verstellelemente 38 in Form von Hydraulikzylindern 39 vorgesehen, die vorzugsweise parallel zu den teleskopierbaren Teilen der Karosserie 9 und des Fahrgestells 3 angeordnet und mit diesen verbunden sind. Denkbar ist, dass die Verstellelemente 38 mit einer in der Fahrerkabine 28 angeordneten Bedien- und Steuereinrichtung 36 verbunden sind, so dass die Längenveränderung der Erntemaschine 2 von der Fahrerkabine 28 aus steuerbar ist. Zudem ist denkbar, dass die Verstellelemente 38 eingerichtet sind, den Abstand A zwischen den das Fahrwerk 4, 6 bildenden Fahrachsen 31, 32 abhängig von der Gewichtskraft eines Erntevorsatzgerätes 12 und/oder eines hier nicht gezeigten Ballastgewichtes zu verändern. Vorzugsweise ist die Bedien- und Steuereinrichtung 36 mit einem nicht näher dargestellten Erntevorsatzgewichtssensors verbunden, der im Hydraulikkreislauf des zur Herstellung der Höhe des Erntevorsatzgerätes dienenden Hydraulikzylinders 37 integrierbar sein kann. Anhand des Drucks im Hydraulikkreislauf ist eine information über die Gewichtskraft des montierten Erntevorsatzgerätes 12 ermittelbar, da zum Anheben eines schweren Erntevorsatzgerätes 12 ein höherer Druck erforderlich ist, als zum Anheben eines leichteren Erntevorsatzgerätes 12. Alternativ kann zusätzlich ein nicht gezeigtes Ballastgewicht am Heck der Erntemaschine 2 bei der Längeveränderung berücksichtigt werden.

Es liegt im Rahmen des Könnens des Fachmanns die beschriebene landwirtschaftliche Erntemaschine in nicht dargestellter Weise abzuwandeln, um die beschriebenen Effekte abzuwandeln, ohne den Rahmen der Erfindung zu verlassen.

### Bezugszeichenliste:

- 1: Selbstfahrender Feldhäcksler
- 2: Landwirtschaftliche Erntemaschine
- 3: Fahrgestell
- 4: Fahrwerk
- 5: Raupenlaufwerk
- 6: Fahrwerk
- 7: Räder
- 8: Erdboden
- 9: Karosserie
- 10: Rahmenteile
- 11: Teile der Außenhülle
- 12: Erntevorsatzgerät
- 13: Erntegut
- 14: Vorpresswalzen
- 15: Häckseltrommel
- 16: Häckselmesser
- 17: Gegenschneide
- 18: Crackerwalzen
- 19: Nachzerkleinerungseinrichtung
- 20: Nachbeschleuniger
- 21: Auswurfschacht
- 22: Auswurfkrümmer
- 23: Antriebsmotor
- 24: Riemenscheibe
- 25: Antriebsriemen
- 26: Hauptantriebsriemen
- 27: Vorspannelement
- 28: Fahrerkabine
- 29: Trennebene
- 30: Verlängerungsmodul
- 31: Fahrachse
- 32: Fahrachse
- 33: Radgehäuse

- 35: Führungselement
- 36: Bedien- und Steuereinrichtung
- 37: Hydraulikzylinder
- 38: Verstellelement
- 39: Hydraulikzylinder

- A: Radabstand
- A': Radabstand
- B: Frontmodul
- C: Heckmodul
- X: Abstandsverlängerung

## Patentansprüche

1. Landwirtschaftliche Erntemaschine, insbesondere selbstfahrender Feidhäcksler, bestehend aus einer Karosserie, umfassend Rahmenteile und Teile der Außenverkleidung und einem Fahrgestell mit mindestens zwei das Fahrwerk bildenden Fahrachsen und unterschiedlichen Arbeits- und Antriebsorganen,
**dadurch gekennzeichnet, dass**
die Erntemaschine (2) in zumindest ein Front- und ein Heckmodul (B,C) trennbar ist und wobei das zumindest eine Front- und das zumindest eine Heckmodul (B, C) gegeneinander verschiebbar sind.

2. Landwirtschaftliche Erntemaschine nach Anspruch 1,
**dadurch gekennzeichnet, dass**
die Karosserie (9) und das Fahrgestell (3) der landwirtschaftlichen Erntemaschine (2) in einem Bereich zwischen den das Fahrwerk (4, 6) bildenden Fahrachsen (31, 32) in der Länge veränderbar sind.

3. Landwirtschaftliche Erntemaschine nach Anspruch 1 oder 2,
**dadurch gekennzeichnet, dass**
der Aufbau und/oder die Funktion der Arbeitsorgane bei einer Längenveränderung unverändert bleiben.

4. Landwirtschaftliche Erntemaschine nach Anspruch 1 oder 2,
**dadurch gekennzeichnet, dass**
die Karosserie (9) und das Fahrgestell (3) in einem Bereich zwischen den das Fahrwerk (4, 6) bildenden Fahrachsen (31, 32) zur Längenveränderung der Erntemaschine (2) eine Trennebene (29) aufweisen.

5. Landwirtschaftliche Erntemaschine nach Anspruch 4
**dadurch gekennzeichnet, dass**
die Trennebene (29) durch einen arbeitsorganfreien Bereich der Erntemaschine (2) verläuft.

6. Landwirtschaftliche Erntemaschine nach wenigstens einem der vorhergehenden Ansprüche,
**dadurch gekennzeichnet, dass**
zwischen dem Frontmodul (B) und dem Heckmodul (C) zur Längenveränderung Karosserieteile (9) und Fahrgesteliteile (3) einfügbar sind, wobei die Karosserieteile (9) Rahmenteile (10) und Teile der Außenhülle (11) umfassen.

7. Landwirtschaftliche Erntemaschine nach wenigstens einem der Ansprüche 4-6,
**dadurch gekennzeichnet, dass**
im Bereich der Trennebene (29) vorhandene Karosserie- und Fahrgestellteile (11) durch verlängerte Karosserie- und Fahrgestellteile (9,3) ersetzt werden.

8. Landwirtschaftliche Erntemaschine nach wenigstens einem der Ansprüche 4-7,
**dadurch gekennzeichnet, dass**
zwischen dem Front- und Heckmodul (B, C) im Bereich der Trennebene (29) zumindest ein Verlängerungsmodul (30) einfügbar ist.

9. Landwirtschaftliche Erntemaschine nach Anspruch 8
**dadurch gekennzeichnet, dass**
das zumindest eine Verlängerungsmodul (29) in Fahrzeuglängsrichtung teleskopierbar ist.

10. Landwirtschaftliche Erntemaschine nach wenigstens einem der Ansprüche 8-9,
**dadurch gekennzeichnet, dass**
das zumindest eine Verlängerungsmodul (29) vormontiert Karosserieteile (9) und Teile des Fahrgestells (3) umfasst.

11. Landwirtschaftliche Erntemaschine nach wenigstens einem der Ansprüche 8-10,
**dadurch gekennzeichnet, dass**
die Karosserie (9) und das Fahrgestell (3) Mittel zur Fixierung des zumindest einen Verlängerungsmoduls (30) aufweisen.

12. Landwirtschaftliche Erntemaschine nach wenigstens einem der Ansprüche 4-5,
**dadurch gekennzeichnet, dass**
die Karosserie (9) und das Fahrgestell (3) im Bereich der Trennebene (29) in Fahrzeuglängsrichtung teleskopartig ausgeführt sind.

13. Landwirtschaftliche Erntemaschine nach Anspruch 12
**dadurch gekennzeichnet, dass**
die Karosserie (9) und das Fahrgestell (3) im Bereich der Trennebene (29) Verstellelemente (38) umfassen, die geeignet sind, die Längenveränderung der Erntemaschine (2) automatisch und/oder manuell zu bewirken.

14. Landwirtschaftliche Erntemaschine nach Anspruch 13
**dadurch gekennzeichnet, dass**
die Verstellelemente (38) eingerichtet sind, den Abstand (A) zwischen den das Fahrwerk (4, 6) bildenden Fahrachsen (31, 32) abhängig von der Gewichtskraft eines Erntevorsatzgerätes (12) und/oder eines Ballastgewichtes zu verändern.

15. Landwirtschaftliche Erntemaschine nach wenigstens einem der Ansprüche 13-14,
**dadurch gekennzeichnet, dass**
die Versteilelemente (38) als Hydraulikzylinder (39) und/oder elektronische Stellmotoren ausgebildet sind.

16. Landwirtschaftliche Erntemaschine nach wenigstens einem der vorhergehenden Ansprüche,
**dadurch gekennzeichnet, dass**
durch die Verlängerung der Karosserie (9) und des Fahrgestells (3) eine Verlängerung des das vordere Fahrwerk (4) aufnehmenden Radgehäuses (33) bewirkt wird.

17. Landwirtschaftliche Erntemaschine nach wenigstens einem der vorhergehenden Ansprüche,
**dadurch gekennzeichnet, dass**
die Antriebsorgane über einen Antriebsriemen (25) mit den Arbeitsorganen in Wirkverbindung stehen und wobei dem Antriebsriemen (25) ein Vorspannelement (27) zugeordnet ist.

## Claims

1. An agricultural harvesting machine, in particular a self-propelled forage harvester, comprising a body including frame portions and portions of the external cladding and a chassis having at least two travel axles forming the travel gear and different working and drive members,
**characterised in that**
the harvesting machine (2) is separable into at least a front and a rear module (B, C) and wherein the at least one front and the at least one rear module (B, C) are displaceable relative to each other.

2. An agricultural harvesting machine according to claim 1 **characterised in that** the body (9) and the chassis (3) of the agricultural harvesting machine (2) are variable in length in a region between the travel axles (31, 32) forming the travel gear (4, 6).

3. An agricultural harvesting machine according to claim 1 or claim 2 **characterised in that** the structure and/or the function of the working members remain unchanged upon a change in length.

4. An agricultural harvesting machine according to claim 1 or claim 2 **characterised in that** the body (9) and the chassis (3) have a separation plane (29) in a region between the travel axles (31, 32) forming the travel gear (4) for the variation in length of the harvesting machine (2).

5. An agricultural harvesting machine according to claim 4 **characterised in that** the separation plane (29) extends through a working member-free region of the harvesting machine (2).

6. An agricultural harvesting machine according to at least one of the preceding claims **characterised in that** body portions (9) and chassis portions (3) can be inserted between the front module (B) and the rear module (C) for the variation in length, wherein the body portions (9) include frame portions (10) and portions of the external cladding (11).

7. An agricultural harvesting machine according to at least one of claims 4 to 6 **characterised in that** body and chassis portions (11) present in the region of the separation plane (29) are replaced by extended body and chassis portions (9, 3).

8. An agricultural harvesting machine according to at least one of claims 4 to 7 **characterised in that** at least one extension module (30) can be inserted between the front and rear modules (B, C) in the region of the separation plane (29).

9. An agricultural harvesting machine according to claim 8 **characterised in that** at least one extension module (29) is telescopic in the longitudinal direction of the vehicle.

10. An agricultural harvesting machine according to at least one of claims 8 and 9 **characterised in that** at least one extension module (29) includes in pre-assembled condition body portions (9) and portions of the chassis (3).

11. An agricultural harvesting machine according to at least one of claims 8 to 10 **characterised in that** the body (9) and the chassis (3) have means for fixing the at least one extension module (30).

12. An agricultural harvesting machine according to at least one of claims 4 and 5 **characterised in that** the body (9) and the chassis (3) are telescopic in the longitudinal direction of the vehicle in the region of the separation plane (29).

13. An agricultural harvesting machine according to claim 12 **characterised in that** the body (9) and the chassis (3) in the region of the separation plane (29) include adjusting elements (38) suitable for automatically and/or manually causing the change in length of the harvesting machine (2).

14. An agricultural harvesting machine according to claim 13 **characterised in that** the adjusting elements (38) are adapted to vary the spacing (A) between the travel axles (31, 32) forming the travel gear (4, 6) in dependence on the weight of a front-mounted harvesting implement (12) and/or a ballast weight.

15. An agricultural harvesting machine according to at least one of claims 13 and 14 **characterised in that** the adjusting elements (38) are in the form of hydraulic cylinders (39) and/or electronic control motors.

16. An agricultural harvesting machine according to at least one of the preceding claims **characterised in that** an extension of the wheel housing (33) accommodating the front travel gear (4) is caused by an extension in length of the body (9) and the chassis (3).

17. An agricultural harvesting machine according to at least one of the preceding claims **characterised in that** the drive members are operatively connected to the working members by way of a drive belt (25) and wherein a tensioning element (27) is associated with the drive belt (25).

## Revendications

1. Moissonneuse agricole, en particulier ramasseuse-hacheuse automotrice, se composant d'une carrosserie comportant des parties de cadre et des parties d'habillage extérieur, et d'un châssis doté au moins de deux essieux formant le mécanisme de roulement et de différents organes de travail et d'entraînement,
**caractérisée en ce que** la moissonneuse (2) peut être
séparée en au moins un module avant et un module arrière (B, C) et au moins un module avant et au moins un module arrière (B, C) étant mobiles l'un contre l'autre.

2. Moissonneuse agricole selon la revendication 1, **caractérisée en ce que** la longueur de la carrosserie (9) et du châssis (3) de la moissonneuse agricole (2) peut être modifiée dans une zone entre les essieux (31, 32) formant le mécanisme de roulement (4, 6).

3. Moissonneuse agricole selon la revendication 1 ou 2, **caractérisée en ce que** la structure et/ou la fonction des organes de travail reste inchangée lors d'une modification de longueur.

4. Moissonneuse agricole selon la revendication 1 ou 2, **caractérisée en ce que** la carrosserie (9) et le châssis (3) présentent un plan de séparation (29) dans une zone entre les essieux (31, 32) formant le mécanisme de roulement (4, 6) pour la modification de longueur de la moissonneuse (2).

5. Moissonneuse agricole selon la revendication 4, **caractérisée en ce que** le plan de séparation (29) s'étend au travers d'une zone sans organe de travail de la moissonneuse (2).

6. Moissonneuse agricole selon au moins l'une quelconque des revendications précédentes, **caractérisée en ce que** des parties de carrosserie (9) et des parties de châssis (3) peuvent être insérées entre le module avant (B) et le module arrière (C) pour la modification de longueur, les parties de carrosserie (9) comportant des parties de cadre (10) et des parties d'habillage extérieur (11).

7. Moissonneuse agricole selon au moins l'une quelconque des revendications 4 à 6, **caractérisée en ce que** des parties de carrosserie et de châssis (11) présentes dans la zone du plan de séparation (29) sont remplacées par des parties de carrosserie et de châssis (9, 3) rallongées.

8. Moissonneuse agricole selon au moins l'une quelconque des revendications 4 à 7, **caractérisée en ce qu'**au moins un module de rallonge (30) peut être inséré entre le module avant et le module arrière (B, C) dans la zone du plan de séparation (29).

9. Moissonneuse agricole selon la revendication 8, **caractérisée en ce qu'**au moins un module de rallonge (29) est télescopique dans le sens longitudinal du véhicule.

10. Moissonneuse agricole selon au moins l'une quelconque des revendications 8 à 9, **caractérisée en ce qu'**au moins un module de rallonge (29) comporte des parties de carrosserie (9) et des parties de châssis (3) prémontées.

11. Moissonneuse agricole selon au moins l'une quelconque des revendications 8 à 10, **caractérisée en ce que** la carrosserie (9) et le châssis (3) présentent des moyens destinés à la fixation d'au moins un module de rallonge (30).

12. Moissonneuse agricole selon au moins l'une quelconque des revendications 4 à 5, **caractérisée en ce que** la carrosserie (9) et le châssis (3) sont réalisés de manière télescopique dans le sens longitudinal du véhicule dans la zone du plan de séparation (29).

13. Moissonneuse agricole selon la revendication 12, **caractérisée en ce que** la carrosserie (9) et le châssis (3) comportent, dans la zone du plan de séparation (29), des éléments de réglage (38) qui conviennent pour provoquer automatiquement et/ou manuellement la modification de longueur de la moissonneuse (2).

14. Moissonneuse agricole selon la revendication 13, **caractérisée en ce que** les éléments de réglage (38) sont aménagés de sorte à modifier la distance (A) entre les essieux (31, 32) formant le mécanisme de roulement (4, 6) en fonction du poids d'un appareil de récolte adaptable (12) et/ou d'un poids de ballast.

15. Moissonneuse agricole selon au moins l'une quelconque des revendications 13 à 14, **caractérisée en ce que** les éléments de réglage (38) sont réalisés comme des vérins hydrauliques (39) et/ou des servomoteurs électroniques.

16. Moissonneuse agricole selon au moins l'une quelconque des revendications précédentes, **caractérisée en ce que** la rallonge de la carrosserie (9) et du châssis (3) provoque une rallonge du logement de roue (33) recevant le mécanisme de roulement avant (4).

17. Moissonneuse agricole selon au moins l'une quelconque des revendications précédentes, **caractérisée en ce que** les organes d'entraînement sont en liaison active avec les organes de travail par le biais d'une courroie de transmission (25), à laquelle est associé un élément de précontrainte (27).
